# EUROPEAN PATENT APPLICATION

(11) **EP 4 675 770 A1**
(43) Date of publication of application: **07.01.2026**
(21) Application number: 25159304.2
(22) Date of filing: 21.02.2025
(51) Int. Cl.: H01M 50/103, H01M 50/15, H01M 50/627, H01M 50/636, H01M 50/664

(54) **SECONDARY BATTERY**

(30) Priority: 03.07.2024 KR 20240087270
(71) Applicant: SAMSUNG SDI CO., LTD., Yongin-si, Gyeonggi-do 17084 (KR)
(72) Inventor: NAM, Joong Woo, 17084 Yongin-si (KR)
(74) Representative: Marks & Clerk LLP

(57) **Abstract**

The present disclosure relates to a secondary battery capable of additionally supplementing an electrolyte, and at least one problem to be solved is to provide a secondary battery capable of additionally supplementing the electrolyte. To this end, provided is a secondary battery comprising: an electrode assembly including a first electrode plate, a second electrode plate, and a separator; a case accommodating the electrode assembly; a cap plate sealing an upper opening of the case and having an injection hole that is a supply passage for electrolyte; and a safety valve installed on the cap plate, sealing the injection hole by a magnetic force and moving by external force to open the injection hole.

## Description

### FIELD

The present disclosure relates to a secondary battery.

### BACKGROUND

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery may be used as a power source for driving a motor and a power storage battery in hybrid vehicles or electric vehicles. The secondary battery may include an electrode assembly having a positive electrode and a negative electrode, a case accommodating the electrode assembly, an electrode terminal connected to the electrode assembly, and the like.

The above-described information disclosed in the technology that serves as the background of the present disclosure is only for improving understanding of the background of the present disclosure and thus may include information that does not constitute the related art.

### SUMMARY

The present disclosure provides a secondary battery capable of additionally supplementing an electrolyte, according to some embodiments.

In addition, the present disclosure provides a secondary battery capable of discharging gas through an electrolyte supply passage when internal pressure increases, according to some embodiments.

These and other aspects and features of the present disclosure will be described in or will be apparent from the following description of embodiments of the present disclosure.

A secondary battery according to some embodiments of the present disclosure for solving the above technical problems may include an electrode assembly including a first electrode plate, a second electrode plate, and a separator, a case accommodating the electrode assembly, a cap plate sealing an upper opening of the case and having an injection hole that is configured as a supply passage for an electrolyte, and a safety valve installed on (including in or under) the cap plate, the safety valve configured to seal the injection hole by a magnetic force and configured to move by external force to open the injection hole.

In some examples, the safety valve may include a first support part fixed to one side of the cap plate facing the injection hole, a first cover extending from the first support part toward a center of the injection hole, a second support part fixed to another side of the cap plate facing the injection hole, and a second cover extending from the second support part toward the center of the injection hole.

In some examples, at least one of the first cover and the second cover may be configured to provide a magnetic force.

In some examples, the first cover and the second cover may be configured to provide magnetic forces of different polarities.

In some examples, the first cover may be configured to provide a magnetic force, and the second cover may include at least one of iron, an iron alloy, nickel, and a cobalt alloy.

In some examples, the first cover may include a first protrusion and a first groove, and the second cover may include a second groove coupled to the first protrusion and a second protrusion coupled to the first groove.

In some examples, the first cover and the second cover may include plastic magnets.

In some examples, the plastic magnet may include an organic ferromagnetic material p-TCNQ.

In some examples, the region where the first cover and the second cover are coupled to each other may be any one of an "I" shape, an "S" shape, and a "W" shape when viewed in a plan view.

In some examples, the safety valve may include: a fixed valve fixed to one side of the cap plate facing the injection hole; and a movable valve installed on another side of the cap plate facing the injection hole and configured to open the injection hole away from the fixed valve when supplying the electrolyte.

In some examples, the fixed valve and the movable valve may be formed in the shape of a plate.

In some examples, at least one of the fixed valve and the movable valve may be configured to provide a magnetic force.

In some examples, the fixed valve may have a first inclined surface at a first end facing the movable valve, and the movable valve may have a second inclined surface contacting the first inclined surface at a second end facing the fixed valve.

In some examples, the movable valve may have elasticity.

A secondary battery according to some embodiments of the present disclosure for solving the above technical problems may include an electrode assembly including a first electrode plate, a second electrode plate, and a separator, a case accommodating the electrode assembly, a cap plate sealing the upper opening of the case and having an injection hole that is configured as a supply passage for electrolyte, and a safety valve installed on the cap plate, including multiple layers configured to close or open the injection hole, and configured to provide a magnetic force.

In some examples, the safety valve may include a first pillar part fixed to an inner side of the cap plate facing one side of the injection hole, a first valve extending from the first pillar part toward the center of the injection hole and forming a plurality of layers, a second pillar part fixed to the inner side of the cap plate facing another side of the injection hole, and a second valve extending from the second pillar part toward the center of the injection hole and forming a plurality of layers.

In some examples, the first valve may be installed in a state in which a plurality of plate-shaped valves are spaced apart in the vertical direction, and the second valve may be formed in a number corresponding to the number of the plurality of plate-shaped valves of the first valve and may be installed in a state in which a plurality of plate-shaped valves of the second valve are spaced apart in the vertical direction.

In some examples, at least one of the first cover and the second cover may be configured to provide a magnetic force.

In some examples, the first valve may include a 1-1 valve extending from the first pillar part, a 1-2 valve extending from the first pillar part and positioned below the 1-1 valve, and a 1-3 valve extending from the first pillar part and positioned below the 1-2 valve.

In some examples, the second valve may include a 2-1 valve extending from the second pillar part and in contact with the 1-1 valve, a 2-2 valve extending from the second pillar part and in contact with the 1-2 valve, and a 2-3 valve extending from the second pillar part and in contact with the 1-3 valve.

In some examples, the first valve and the second valve may be formed in multiple layers, and the shapes in which the first valve and the second valve are combined may be different for each layer.

According to the present disclosure, an electrolyte can be replenished through a safety valve that is opened and closed by a magnetic force, thereby improving the performance of the corresponding secondary battery and extending the lifespan thereof.

In addition, according to the present disclosure, heat and gas generated inside the secondary battery can be discharged through an injection hole that is an electrolyte supply passage, thereby shortening the heat dissipation time and preventing thermal runaway.

However, the effects achievable through the present invention are not limited to those described above, and other technical effects not mentioned can be clearly understood by those skilled in the art from the description of the invention provided below.
At least some of the above and other features of the invention are set out in the claims.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view showing a secondary battery according to some embodiments of the present disclosure.
FIG. 2 is a cross-sectional view of the secondary battery according to some embodiments of the present disclosure.
FIG. 3 is a perspective view showing a cap plate and a safety valve according to some embodiments of the present disclosure.
FIG. 4 is a perspective view showing the safety valve according to some embodiments of the present disclosure.
FIG. 5 is a plan view showing the safety valve according to some embodiments of the present disclosure.
FIG. 6 is a front sectional view showing the safety valve according to some embodiments of the present disclosure.
FIG. 7 is a front sectional view showing a state in which the safety valve, according to some embodiments of the present disclosure, is bent downward by a supply pipe.
FIG. 8 is a front sectional view showing a state in which the safety valve, according to some embodiments of the present disclosure, is bent upward by gas pressure.
FIG. 9 is a perspective view showing a safety valve according to other embodiments of the present disclosure.
FIG. 10 is a plan view showing the safety valve according to other embodiments of the present disclosure.
FIG. 11 is a perspective view showing a safety valve according to other embodiments of the present disclosure.
FIG. 12 is a plan view showing the safety valve according to other embodiments of the present disclosure.
FIG. 13 is a plan view showing a safety valve according to other embodiments of the present disclosure.
FIG. 14 is a plan view showing a safety valve according to other embodiments of the present disclosure.
FIG. 15 is a plan view showing a safety valve according to other embodiments of the present disclosure.
FIG. 16 is a cross-sectional view showing a safety valve according to other embodiments of the present disclosure.
FIG. 17 is a cross-sectional view showing a state in which a safety valve according to other embodiments of the present disclosure is installed in multiple layers.
FIG. 18 is a plan view showing a safety valve according to other embodiments of the present disclosure.
FIG. 19 is a cross-sectional view taken along line A-A of FIG. 18.
FIG. 20 is a front sectional view showing a state in which a movable valve according to other embodiments of the present disclosure is bent downward by a supply pipe.
FIGS. 21A and 21B are perspective views showing a battery pack including an example secondary battery according to the present disclosure.
FIGS. 22A and 22B are a perspective view and a side view showing a vehicle including an example battery pack according to the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

In addition, the terms "comprise" or "include" and/or "comprising" or "including," when used in this specification, specify the presence of stated shapes, numbers, steps, operations, members, elements, and/or groups thereof, but do not preclude the presence or addition of one or more other shapes, numbers, steps, operations, members, elements, and/or groups thereof.

Additionally, for the purpose of facilitating an understanding of the invention, the attached drawings are not depicted to actual scale; dimensions of some components may be exaggerated for clarity. Also, identical components in different embodiments may be denoted with the same reference numerals.

When two objects of comparison are referred to as being the same, it means the two objects are "substantially the same." Thus, substantially the same may include a deviation that is considered low in the art, for example, a deviation of less than 5%. In addition, when a parameter is said to be uniform in a certain region, it may mean that the parameter is uniform from an average perspective.

Although "first," "second," and the like are used to describe various components, these components are of course not limited by these terms. These terms are only used to distinguish one component from other components, and unless otherwise stated, a first component could be termed a second component.
Throughout the specification, unless specifically stated otherwise, each component may be singular or plural.

When an arbitrary element is referred to as being "disposed above (or below)" or "disposed on (or under)" a component, it may mean not only that the arbitrary element is disposed in contact with an upper surface (or lower surface) of the component, but also that other elements may be interposed between the component and the arbitrary element disposed on (or under) the component.

When a component is described as being "connected," "coupled," or "joined" to another component within this patent document, it is understood that the components may be directly connected or joined to each other. However, it should also be interpreted that an intervening component may be interposed between them, or that each component may be "connected," "coupled," or "joined" through another intermediary component. Furthermore, when one part is described as being electrically connected (electrically coupled) to another, this encompasses not only a direct connection but also includes scenarios where other elements are positioned in between, facilitating an indirect connection.

Throughout this specification, the term 'A and/or B' should be interpreted as meaning either A, B, or both A and B, unless an alternative interpretation is explicitly stated. Thus, 'and/or' encompasses any and all possible combinations of the items listed. Similarly, when 'C to D' is mentioned, it is understood to mean C or more, up to and including D, unless noted otherwise. The terminology employed herein is intended solely for describing specific embodiments and should not be regarded as limiting the scope of this disclosure.

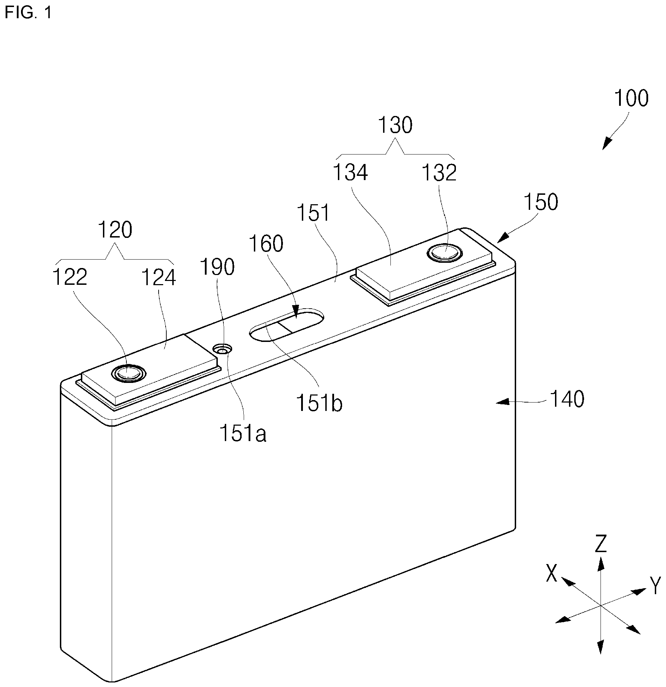

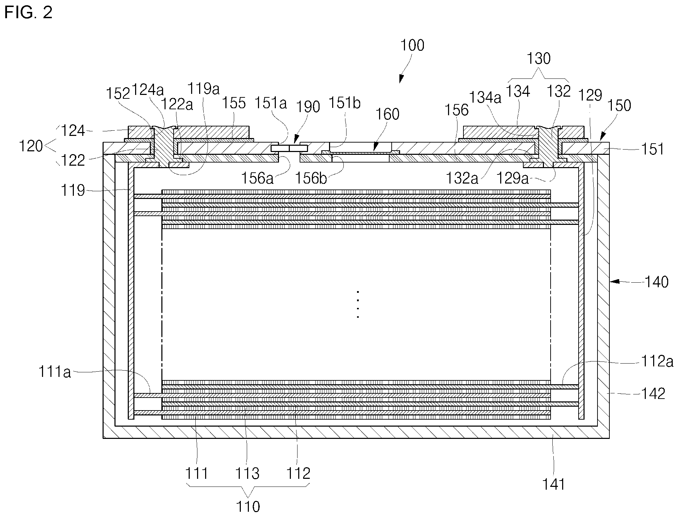

A secondary battery 100 according to some embodiments of the present technology will be described with reference to the drawings. FIG. 1 is a perspective view showing a secondary battery 100 according to some embodiments of the present disclosure. FIG. 2 is a cross-sectional view of the secondary battery 100 according to some embodiments of the present disclosure. As shown in FIGS. 1 and 2, the secondary battery 100 may include an electrode assembly 110, a first current collector (first current collection part 119), a first terminal 120, a second current collector (second current collection part 129), a second terminal 130, a case 140, a cap assembly 150, and a safety valve 190. In addition, the secondary battery 100 may further include a vent valve 160.

The electrode assembly 110 may be formed by winding or stacking a first electrode plate 111, a separator 113, and a second electrode plate 112, which are formed in a thin plate or film shape. When the electrode assembly 110 is a wound stack, the winding axis may be parallel to the longitudinal direction (Y) of the case 140. In addition, the electrode assembly 110 may be of a stack type rather than a winding type, and the shape of the electrode assembly 110 is not so limited in the present disclosure. In addition, the electrode assembly 110 may be a Z-stack electrode assembly 110 in which a positive electrode plate and a negative electrode plate are inserted on both sides of the separator 113 folded in a Z-stack. In addition, the electrode assembly 110 may be accommodated inside the case 140 by stacking one or more electrode assemblies 110 so that the long sides thereof are adjacent to each other, and the number of electrode assemblies 110 is not so limited in the present disclosure. The first electrode plate 111 of the electrode assembly 110 may serve as a negative electrode, and the second electrode plate 112 may serve as a positive electrode. Of course, the opposite is also possible.

The first electrode plate 111 may be formed by applying a first electrode active material, such as graphite or carbon, to a first electrode current collector plate formed of a metal foil, such as copper, a copper alloy, nickel, or a nickel alloy, and may include a first electrode tab 111a (or first uncoated portion), which is a region to which the first electrode active material is not applied. The first electrode tab 111a may be a passage for current flow between the first electrode plate 111 and the first current collection part 119. In some examples, the first electrode tab 111a may be formed by cutting in advance to protrude to one side when manufacturing the first electrode plate 111, and may protrude further to one side than the separator 113 without a separate cutting process. In some examples, a plurality of first electrode tabs 111a are combined and tack-welded, and a first current collection part 119 is welded to the tack-welded first electrode tabs 111a, thereby coupling the first electrode tabs 111a and the first current collection part 119 to each other.

The second electrode plate 112 may be formed by applying a second electrode active material such as a transition metal oxide on a second electrode collector plate formed of a metal foil such as aluminum or an aluminum alloy and may include a second electrode tab 112a (or second uncoated portion), which is a region to which the second electrode active material is not applied. The second electrode tab 112a may be a passage for current flow between the second electrode plate 112 and the second current collection part 129. In some examples, the second electrode tab 112a may be formed by cutting in advance to protrude to the other side when manufacturing the second electrode plate 112, and may protrude further to the other side than the separator 113 without separately cutting. In some examples, a plurality of second electrode tabs 112a may be gathered and tack-welded, and the second current collection part 129 may be welded to the tack-welded second electrode tabs 112a, thereby coupling the second electrode tabs 112a and the second current collection part 129 to each other.

In some examples, the first electrode tab 111a may be positioned on the left side (near side surface 142) of the electrode assembly 110, and the second electrode tab 112a may be positioned on the right side (near side surface 142) of the electrode assembly 110, or may be positioned on one side in the same direction. Here, the left and right sides are for simplicity of explanation based on the secondary battery 100 shown in FIG. 2, and the positions thereof may change when the secondary battery 100 rotates left and right or up and down.

The first electrode tab 111a of the first electrode plate 111 and the second electrode tab 112a of the second electrode plate 112 are respectively positioned at both ends of the electrode assembly 110. In some examples, the electrode assembly 110 may be accommodated in the case 140 together with an electrolyte. In addition, in the electrode assembly 110, the first current collection part 119 and the second current collection part 129 may be welded and connected to the first electrode tab 111a of the first electrode plate 111 and the second electrode tab 112a of the second electrode plate 112, which may be exposed on both sides, respectively, and positioned thereon.

In some examples, the separator 113 may be positioned between the first electrode plate 111 and the second electrode plate 112 to prevent short circuits and enable movement of lithium ions, and may include polyethylene, polypropylene, or a composite film of polyethylene and polypropylene. In addition, the separator 113 may be replaced with an inorganic solid electrolyte, such as a sulfide-based, oxide-based, or phosphate-based compound-based electrolyte that does not require a liquid or gel-based electrolyte.

As shown, the first current collection part 119 and the second current collection part 129 to which the first electrode tab 111a of the first electrode plate 111 and the second electrode tab 112a of the second electrode plate 112 are electrically connected, respectively, are positioned at both ends of the electrode assembly 110. In some examples, the electrode assembly 110 may be accommodated in the case 140 together with an electrolyte.

In some examples, the electrolyte may include a lithium salt such as LiPF6, LiBF4 in an organic solvent such as EC (Ethylene Carbonate), PC (Propylene Carbonate), DEC (Diethyl Carbonate), EMC (Ethyl Methyl Carbonate), DMC (Dimethyl Carbonate). Additionally, the electrolyte may be liquid or gel. In some examples, when an inorganic solid electrolyte is used, the separator may be omitted.

In some examples, the first current collection part 119 may be in contact with the first electrode tab 111a protruding from one end of the electrode assembly 110. In practice, the first current collection part 119 may be welded to the first electrode tab 111a. In some examples, the first current collection part 119 is formed in a roughly 'L' shape, and a terminal hole 119a may be formed at the upper portion. In some examples, a first terminal pillar 122 may be fitted into the terminal hole 119a and may be riveted and/or welded. In some examples, the first current collection part 119 may be made of copper or a copper alloy.

The first current collection part 119 may be modified to have various shapes, and the shape or position where the first current collection part 119 comes into contact with the first electrode tab 111a may also be changed.

The first terminal 120 may be formed of metal and may be electrically connected to the first electrode plate 111 via the first current collection part 119. In some examples, the first terminal 120 may include a first terminal pillar 122 and a first terminal plate 124.

In some examples, the first terminal pillar 122 may protrude and extend upwardly through a cap plate 151 of the cap assembly 150 by a predetermined length, and may be electrically connected to the first current collection part 119 at the lower portion of the cap plate 151. In addition, in some examples, the first terminal pillar 122 may protrude and extend upwardly from the cap plate 151 by a predetermined length, and at the same time, a flange 122a may be formed at the lower portion of the cap plate 151 to prevent the first terminal pillar 122 from being removed from the cap plate 151. An area of the first terminal pillar 122, located at the lower portion of the flange 122a, may be fitted into the first terminal hole 119a of the first current collection part 119 and then riveted and/or welded. In some examples, the first terminal pillar 122 may be made of copper, a copper alloy, aluminum, or an aluminum alloy.

The first terminal plate 124 may have a hole 124a, into which the first terminal pillar 122 may be coupled and may be riveted and/or welded. In some examples, the facing surfaces between the first terminal pillar 122 exposed upwardly and the first terminal plate 124 may be welded to each other. For example, a laser beam may be provided to a boundary region between the first terminal pillar 122 exposed upwardly and the first terminal plate 124, and thus the boundary region may be melted and then cooled to be welded to each other. In some examples, the first terminal pillar 122 and the first terminal plate 124 may be electrically insulated from the cap plate 151.

The second current collection part 129 may be in contact with the second electrode tab 112a protruding from one end of the electrode assembly 110. In some examples, the second current collection part 129 may be formed in an approximately "L" shape, and a terminal hole 129a may be formed on the upper portion. In some examples, the second terminal pillar 132 is fitted and coupled into the terminal hole 129a. The second current collection part 129 may be made of, for example, but not limited to, aluminum or an aluminum alloy. The second terminal pillar 132 may protrude and extend upward by a predetermined length through the cap plate 151 (to be described further below), and may also be electrically connected to the second current collection part 129 at the lower portion of the cap plate 151.

The second current collection part 129 may be modified to have various shapes, and the shape or position in which the second current collection part 129 comes into contact with the second electrode tab 112a may also be modified.

The second terminal 130 may also be formed of metal and may be electrically connected to the second electrode plate 112 via the second current collection part 129. In some examples, the second terminal 130 may include a second terminal pillar 132 and a second terminal plate 134.

The second terminal pillar 132 may protrude and extend a predetermined length from the upper portion of the cap plate 151, and a flange 132a may be formed at the lower portion of the cap plate 151 to prevent the second terminal pillar 132 from being separated from the cap plate 151. An area of the second terminal pillar 132, located at the lower portion of the flange 132a, may be riveted and/or welded after being fitted into the second terminal hole 129a of the second current collection part 129.

In some examples, the second terminal pillar 132 may be made of aluminum or an aluminum alloy. The second terminal plate 134 may have a hole 134a. In addition, the second terminal plate 134 may be coupled to the second terminal pillar 132. That is, the second terminal pillar 132 is coupled to the hole 134a of the second terminal plate 134. In addition, the second terminal pillar 132 and the second terminal plate 134 may be riveted and/or welded to each other. In some examples, a boundary region of the second terminal pillar 132 and the second terminal plate 134, which are exposed upwardly, may be welded to each other. For example, a laser beam may be provided to the boundary region of the second terminal pillar 132 and the second terminal plate 134, which are exposed upwardly, and thus the boundary region may be melted and cooled to be welded to each other.

In some examples, the second terminal pillar 132 and the second terminal plate 134 may be electrically insulated from the cap plate 151. In some examples, the second terminal pillar 132 and the second terminal plate 134 may be electrically connected to the cap plate 151, wherein the cap plate of the cap assembly 150 may have the same polarity as the second terminal 130 (e.g., a positive polarity).

The case 140 may be in the shape of a roughly rectangular parallelepiped having a hollow interior with an opening formed at the upper portion. Through this opening, the electrode assembly 110 may be inserted into the interior of the case 140. In addition, the first current collection part 119 of the first terminal 120 and the second current collection part 129 of the second terminal 130 may also be positioned within the interior of the case 140. The case 140 may have a rectangular bottom surface 141 and four side surfaces 142 extending approximately vertically from four sides of the bottom surface 141.

The cap assembly 150 may be coupled to the open top portion of the case 140. In some examples, the cap assembly 150 may include the cap plate 151, a seal gasket 152, an upper coupling member 155, the vent valve 160, and an insulation member 156.

The cap plate 151 seals the (upper) opening of the case 140 and may be formed of the same material as the case 140. For example, the cap plate 151 may be coupled to the case 140 by, but not limited to, a laser welding method. The cap plate 151 and the case 140 may have the same polarity. The cap plate 151 may be provided with a vent hole 151b penetrating between the upper and lower surfaces and an injection hole 151a which is an electrolyte injection port. The injection hole 151a is configured as a supply passage for the electrolyte and may form a hole in the vertical direction. In addition, gas and heat generated inside the case 140 may also be discharged through the injection hole 151a. In addition, the discharge of the gas and heat generated inside the case 140 may also be performed through the vent hole 151b.

The seal gasket 152 may be formed of an insulating material between the cap plate 151 and the first terminal pillar 122 of the first terminal 120 and between the cap plate 151 and the second terminal pillar 132 of the second terminal 130. The seal gasket 152 may seal portions between the first terminal pillar 122 and the second terminal pillar 132 and the cap plate 151, respectively. The seal gasket 152 can prevent external moisture from penetrating into the interior of the secondary battery 100 or can prevent the electrolyte contained inside the secondary battery 100 from leaking out.

An upper coupling member 155 installed in the first terminal 120 and the second terminal 130 may be made of an insulating material. The upper coupling member 155 may be installed between the upper portion of the cap plate 151 and the first terminal plate 124 and between the upper portion of the cap plate 151 and the second terminal plate 134. The upper coupling member 155 may be installed in a state of being in close contact with the seal gasket 152. In addition, the upper coupling member 155 may be formed integrally with the seal gasket 152. In some examples, the upper coupling member 155 installed in the first terminal 120 may be made of an insulating material, and the upper coupling member 155 installed in the second terminal 130 may be made of a conductive material. Accordingly, the upper coupling member 155 may electrically connect the second terminal plate 134 and the cap plate 151, and accordingly, various modifications are possible, such as the cap plate 151 having the same polarity as the second terminal 130.

The insulation member 156 may be shaped to correspond to the cap plate 151 and may be modified to have various shapes within the technical concept of being installed between the cap plate 151 and the electrode assembly 110. The insulation member 156 is sized to roughly correspond to the lower surface of the cap plate 151 and may be in close contact with the lower surface of the cap plate 151. Of course, an electrolyte injection hole 156a and a vent hole 156b may be formed in the insulation member 156 at positions corresponding to the injection hole 151a and the vent hole 151b of the cap plate 151. The insulation member 156 can prevent unnecessary short circuits from occurring between the first current collection part 119 and the cap plate 151 and between the second current collection part 129 and the cap plate 151. In addition, since the insulation member 156 is formed to have a size corresponding to that of the cap plate 151, unnecessary short circuits between the electrode assembly 110 and the cap plate 151 can also be prevented. The insulation member 156 may be made of polyphenylene sulfide (PPS) which has a high melting point (285°C) and high tensile strength. Accordingly, when the heat of an internal short circuit caused by penetration of the secondary battery 100 is released through the injection hole 151a and the vent hole 151b, heat transmission to adjacent cells is prevented by the insulation member 156, thereby improving safety. When the secondary battery 100 consists of one unit cell, it is not required to block heat transfer to an adjacent secondary battery 100, and thus the insulation member 156 may also be made of polypropylene (PP).

The vent valve 160 may be installed at a position facing the vent hole 151b of the cap plate 151, and may be opened at a set pressure. The vent valve 160, as shown, is installed in the cap plate 151 and may be modified to have various shapes within the technical concept of closing or opening the vent hole 151b. The vent valve 160 may be opened at a pressure higher than the set pressure to discharge gas or heat inside the case 140 to the outside of the case 140.

The vent valve 160 may be installed on the lower side of the cap plate 151. The vent valve 160 may be installed between the cap plate 151 and the insulation member 156, and may open and close the vent hole 151b provided in the cap plate 151 and the vent hole 156b provided in the insulation member 156.

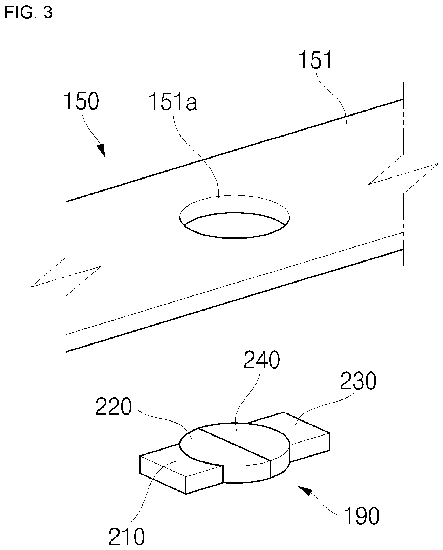

FIG. 3 is a perspective view showing the cap plate 151 and the safety valve 190 according to some embodiments of the present disclosure. As shown in FIG. 3, the safety valve 190 is installed in the injection hole 151a of the cap plate 151 and opens and closes the injection hole 151a. The safety valve 190 seals the injection hole 151a by a magnetic force, and is moved by an external force to open the injection hole 151a.

The safety valve 190 may be installed at a position facing the injection hole 151a of the cap plate 151, and may be opened at a set pressure. The safety valve 190 may be installed in the cap plate 151 to close or open the injection hole 151a, and may be modified to have various shapes within the technical concept of having a magnetic force. The safety valve 190 may use a material having magnetism, and when the pressure inside the secondary battery 100 is higher than the outside, the injection hole 151a may be opened to release gas, and the injection hole 151a may then be sealed again by the magnetic force. The safety valve 190 may have elasticity and may be manufactured using a material having multiple magnetic forces. By using the safety valve 190, the secondary battery 100 can be reused with a structure in which the injection hole 151a is closed by the magnetic force after the gas is released. Additionally, the electrolyte may be supplied to the inside of the secondary battery 100 through the safety valve 190.

When the electrolyte is supplied to the inside of the secondary battery 100 through the safety valve 190 and gas or heat is discharged to the outside of the secondary battery 100 through the safety valve 190, the vent hole 151b and the vent valve 160 need not be provided.

The safety valve 190 may be installed on the lower side of the cap plate 151 or on the body of the cap plate 151. When the safety valve 190 is installed on the lower side of the cap plate 151, the safety valve 190 is installed between the cap plate 151 and the insulation member 156, and may open and close the injection hole 151a provided in the cap plate 151 and the electrolyte injection hole 156a provided in the insulation member 156. In addition, when the safety valve 190 is installed in the body of the cap plate 151, the cap plate 151 and the safety valve 190 may be integrally molded by a double injection molding method. The double injection molding method is a molding method used to combine two or more different materials into one part. The double injection molding method can improve the characteristics of a product by simultaneously forming two or more different materials in a single operation. The double injection molding method is performed by using two different injection molding machines or by adding two injection units to one injection machine. The cap plate 151 and the safety valve 190 may be simultaneously molded and joined using a double injection molding method. Since the cap plate 151 and the safety valve 190 may be molded as one piece, the product manufacturing process may be performed efficiently, and high accuracy and coupling strength between parts can be secured. In addition, in other embodiments, the safety valve 190 and the insulation member 156 may be formed integrally by a double injection molding method.

The safety valve 190 consists of multiple parts and is maintained in a closed state by a magnetic force, thereby preventing leakage of electrolyte through the injection hole 151a of the cap plate 151. In addition, discharge of fluid through the safety valve 190 is also prevented.

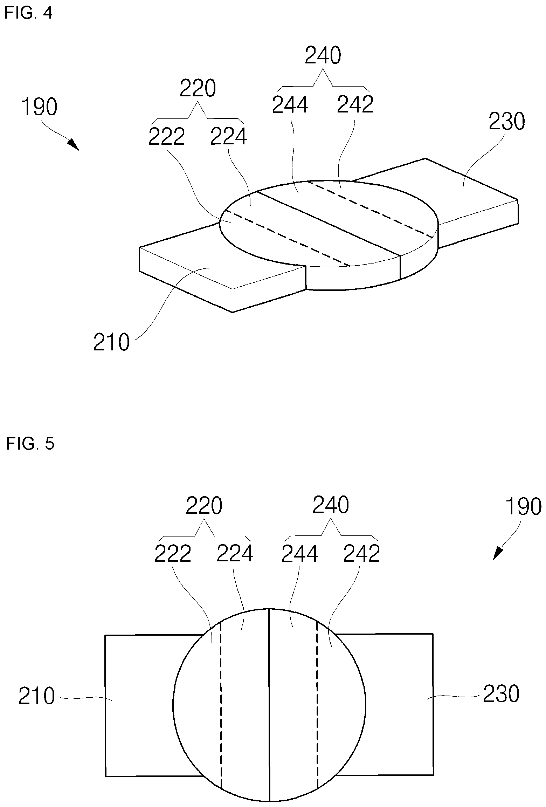

FIG. 4 is a perspective view showing the safety valve 190 according to some embodiments of the present disclosure. FIG. 5 is a plan view showing the safety valve 190 according to some embodiments of the present disclosure. As shown in FIGS. 4 and 5, the safety valve 190 may include a first support part 210, a first cover 220, a second support part 230, and a second cover 240. The safety valve 190 may be divided into a section having magnetism and a section not having magnetism. In addition, the safety valve 190 may be divided into a section having high elasticity and a section having relatively low elasticity.

The first support part 210 may be modified to have various shapes within the technical concept of being fixed to one side of the cap plate 151 facing the injection hole 151a. The first support part 210 may be modified to have various shapes within the technical concept of being fixed to the cap plate 151 facing the injection hole 151a. The first support part 210 may be fixed integrally to the cap plate 151, and may be inserted into and fixed in a groove provided in the cap plate 151. In addition, the first support part 210 may be modified to have various shapes, such as being made of an insulating material or an elastic material.

The first support part 210 is connected to the first cover 220 and may be shaped of a protrusion extending toward the inside of the cap plate 151. The first support part 210, according to some embodiments of the present disclosure, may be formed in a square or oval shape. The first support part 210 may be located on the inside of the cap plate 151 and may support the first cover 220. Alternatively, the first support part 210 may be fixed between the cap plate 151 and the insulation member 156. Alternatively, the structure of the first support part 210 may be deleted, and the first cover 220 may be directly connected to the cap assembly 150 or the insulation member 156.

The second support part 230 may be modified to have various shapes within the technical concept of being fixed to the other side of the cap plate 151 facing the injection hole 151a. The second support part 230 may be installed at a position facing the first support part 210 with the injection hole 151a disposed between the second support part 230 and the first support part 210. The second support part 230 may be fixed integrally to the cap plate 151, and may be fixed by being inserted into the groove provided in the cap plate 151.

The second support part 230 is connected to the second cover 240 and may be shaped of a protrusion extending toward the inside of the cap plate 151. The second support part 230, according to some embodiments of the present disclosure, may be formed in a square or oval shape. The second support part 230 may be positioned on the inner side of the cap plate 151 and may support the second cover 240. Alternatively, the second support part 230 may be fixed between the cap plate 151 and the insulation member 156. Alternatively, the structure of the second support part 230 may be deleted, and the second cover 240 may be directly connected to the cap assembly 150 or the insulation member 156.

The first cover 220 may be modified to have various shapes within a technical concept of extending from the first support part 210 or cap plate 151 toward the center of the injection hole 151a. The second cover 240 may be modified to have various shapes within a technical concept of extending from the second support part 230 or cap plate 151 toward the center of the injection hole 151a.

The first cover 220 and the second cover 240 are restorable to the initial state of blocking the injection hole 151a by a magnetic force. For example, at least one of the first cover 220 and the second cover 240 may have a magnetic force (are configured to provide a magnetic force). The first cover 220 may have a magnetic force, and the second cover 240 may include at least one of iron, an iron alloy, nickel, and a cobalt alloy. In an embodiment, only the first cover 220 has a magnetic force, and the second cover 240 may include a material that adheres to the magnetic force. Alternatively, only the second cover 240 has a magnetic force, and the first cover 220 may include a material that adheres to the magnetic force. Of course, the first and second covers 220, 240 may both be magnetic.

The first cover 220 and the second cover 240 may be in contact with each other in the middle of the injection hole 151a when the injection hole 151a is sealed. The region where the first cover 220 and the second cover 240 are coupled to each other may be formed in an "I" shape when viewed in a plan view. The first cover 220 and the second cover 240 may be shaped to correspond to the injection hole 151a. When the injection hole 151a forms a circular hole, the first cover 220 and the second cover 240 may have a semicircular panel shape. Since the first cover 220 and the second cover 240 may be in contact with each other by a magnetic force, the injection hole 151a may be blocked by the first cover 220 and the second cover 240.

In addition, the first cover 220 and the second cover 240 may have magnetic forces. Here, since the first cover 220 and the second cover 240 have magnetic forces of different polarities (are configured to provide magnetic forces of different polarities), the first cover 220 and the second cover 240 may move in the direction in which they are in contact with each other when the external force is removed.

In some examples, at least one of the first cover 220 and the second cover 240 may include a plastic magnet. In addition, the plastic magnet may include an organic ferromagnetic material p-TCNQ. An organic ferromagnetic material (p-TCNQ) is an organic material exhibiting strong magnetic properties, and includes a compounds such as tetracyanoquinodimethane (TCNQ). The organic ferromagnetic material (p-TCNQ) may be obtained by a process of preparing a mixture by mixing an organic ferromagnetic precursor, such as tetracyanoethylene (TCNE) or tetracyanoanthraquinodimethane (TCAQ), including TCNQ, with an acidic solvent.

In the aforementioned process, a substance such as trifluoroacetic acid (TFA) or methyl sulfate (MSA) is typically used as the acidic solvent, and such an acidic solvent is mixed with an organic ferromagnetic precursor to prepare the mixture. The weight ratio of the acidic solvent and the organic ferromagnetic precursor may be about 1:3 to 10, and more preferably, in some embodiments, 1:5 to 7.

Thereafter, an organic ferromagnetic material (p-TCNQ) is formed through a heat treatment process. The heat treatment process is performed in stages of 45 °C to 60 °C, 95 °C to 120 °C, and 135 °C to 145 °C for 30 minutes to 2 hours, respectively. Here, the desired properties of the ferromagnet may be obtained by controlling the heat treatment temperature and time. Subsequently, a self-polymerization reaction is performed to produce a compound.

In addition, a purified self-polymerization reaction product is subjected to freeze-drying and annealing steps. Freeze-drying is performed at a pressure of 0.01 to 0.1 mmHg and a temperature of -160 °C to -80 °C, and annealing is performed at 330 °C to 410 °C or less.

The organic ferromagnetic material (p-TCNQ) may contain a metal in an amount of 0.030 ppm or less and may be composed of a self-polymerizing organic ferromagnetic material containing 50 to 70 wt% of C, 1 to 5 wt% of H, 5 to 15 wt% of N, and 20 to 30 wt% of O. The properties of such an organic ferromagnetic material can be variously controlled depending on the self-polymerization reaction temperature, composition, and processing process.

As described above, the organic ferromagnetic material (p-TCNQ) is an organic material that can be manufactured by mixing a ferromagnetic precursor such as TCNQ with an acidic solvent and formed through heat treatment and processing.

The first cover 220 and the second cover 240 may be formed of a material having magnetism and elasticity in addition to an organic ferromagnetic material. For example, the first cover and the second cover 240 may include at least one of a ferrite magnetic body, a magnetic rubber, and a polymer. The ferrite magnetic body has special magnetic properties as a magnetic material, and at the same time, may exhibit elasticity against a certain deformation. Alternatively, magnetic particles may be mixed into a specific type of polymer or rubber to impart magnetism. Such magnetic rubber and polymer may have a magnetic function along with elasticity.

The first cover 220 may be fixed to the first support part 210 and may be modified to have various shapes within the technical concept of having elasticity. The first cover 220 may be connected to the first support part 210 and may be formed in the shape of a plate capable of a bending motion. In addition, the first cover 220 may be provided with magnetism at a position facing the second cover 240. The first cover 220 according to some embodiments of the present disclosure may include a first body 222 and a first wing 224.

The first body 222 may be formed in the shape of a plate having elasticity, and one side of the first body 222 may be connected to the first support part 210 and the other side of the first body 222 may be connected to the first wing 224. When the first cover 220 is deformed by an external force, the first body 222 may be deformed more than the first wing 224.

The first wing 224 may extend from the first body 222 toward the second cover 240 and may be modified to have various shapes within the technical concept of having a magnetic force. The first wing 224 and the first body 222 may be formed as one piece, and the first wing 224 may be formed in the shape of a plate. The first wing 224 may be a magnetic body having elasticity.

The first wing 224 may include a magnetic body, and the magnetic body may include, for example, a plastic magnet. In addition, the plastic magnet may include an organic ferromagnetic material (p-TCNQ).

Of the first body 222 and first wing 224, only the first wing 224 may have magnetism. In addition, both of the first body 222 and the first wing 224 may have magnetism.

The second cover 240 may be fixed to the second support part 230 and may be modified to have various shapes within the technical concept of having elasticity. The second cover 240 may be connected to the second support part 230, such as shown, and may be formed in the shape of a plate capable of a bending motion. In addition, the second cover 240 may be provided with magnetism at a position facing the first cover 220. The second cover 240 according to some embodiments of the present disclosure may include a second body 242 and a second wing 244.

The second body 242 may be formed in the shape of a plate having elasticity, and the other side of the second body 242 may be connected to the second support part 230 and one side of the second body 242 may be connected to the second wing 244. When the second cover 240 is deformed by an external force, the second body 242 may be deformed more than the second wing 244.

The second wing 244 may extend from the second body 242 toward the first cover 220 and may be modified to have various shapes within the technical concept of having a magnetic force. The second wing 244 and the second body 242 may be formed as one piece, and the second wing 244 may be formed in the shape of a plate. The second wing 244 may be a magnetic body having elasticity.

The second wing 244 may include a magnetic body, and the magnetic body may include, for example, a plastic magnet. In addition, the plastic magnet may include an organic ferromagnetic material (p-TCNQ).

The second wing 244 may be formed using a material having magnetism and elasticity in addition to an organic ferromagnetic material. For example, the second wing 244 may include a ferrite magnetic body and at least one of a magnetic rubber and a polymer.

The magnetic bodies included in the first cover 220 and the second cover 240 can maintain magnetic forces thereof up to 350°C. Therefore, the safety valve 190 can operate stably even in a high-temperature environment.

In addition, the pressure at which the mutual coupling of the first cover 220 and the second cover 240 is released can be 8 kgf/cm2 to 12 kgf/cm2. When the pressure at which the mutual coupling of the first cover 220 and the second cover 240 is released is less than 8 kgf/cm2, the mutual coupling of the first cover 220 and the second cover 240 may be released even by a small gas pressure, and thus the operational reliability of the secondary battery 100 may deteriorate. In addition, when the pressure at which the mutual coupling of the first cover 220 and the second cover 240 is released is greater than 12 kgf/cm2, the pressure of gas inside the secondary battery 100 may increase, which may lower the operational reliability of the secondary battery 100.

The thicknesses of the first cover 220 and the second cover 240 may be 1 mm to 10 mm. When the thicknesses of the first cover 220 and the second cover 240 are less than 1 mm, the structural rigidity of the first cover 220 and the second cover 240 may be weakened, resulting in reduced durability. If the thickness of the first cover 220 and the second cover 240 exceeds 10 mm, the elasticity of the first cover 220 and the second cover 240 may be insufficient, making it difficult to smoothly discharge gas, and there may also be difficulties in supplying electrolyte through the safety valve 190.

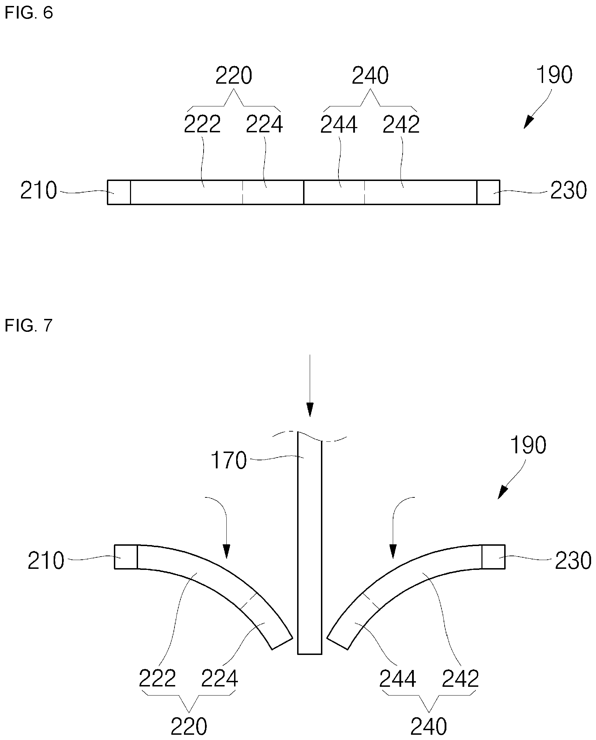

FIG. 6 is a front sectional view showing the safety valve 190 according to some embodiments of the present disclosure. FIG. 7 is a front sectional view showing a state in which the safety valve 190 according to some embodiments of the present disclosure is bent downward by a supply pipe 170. As shown in FIGS. 6 and 7, when the supply pipe 170 is installed while pushing the safety valve 190 downward, the first cover 220 and the second cover 240 are spaced apart from each other and bent downward along the supply pipe 170. Accordingly, the electrolyte may be supplied to the lower side of the safety valve 190 through the supply pipe 170.

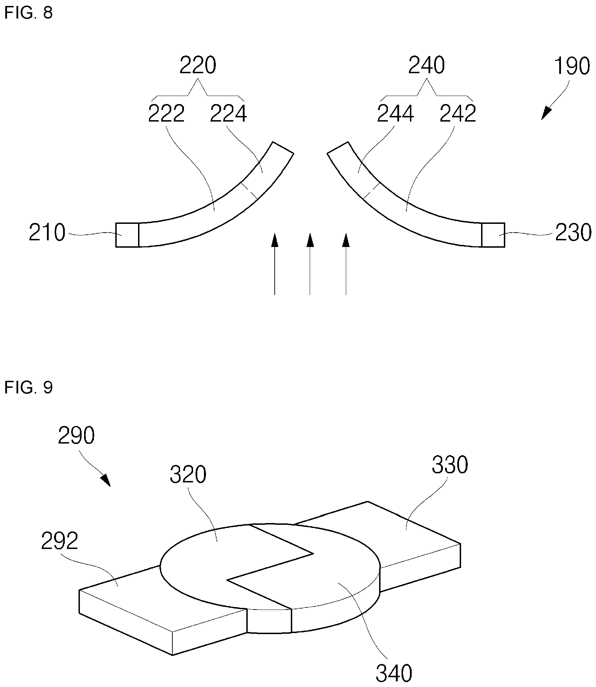

FIG. 8 is a front sectional view showing a state in which the safety valve 190, according to some embodiments of the present disclosure, is bent upward by gas pressure. As shown in FIG. 8, the safety valve 190 is bent upward by gas pressure exceeding the set pressure and discharges gas.

To describe this in more detail, in a state in which the first wing 224 and the second wing 244 are in contact with each other due to a magnetic force, the first wing 224 and the second wing 244 are spaced apart from each other by gas pressure exceeding a set pressure. Then, the first cover 220 and the second cover 240 are bent upward, forming a passage for gas movement between the first wing 224 and the second wing 244.

When the gas pressure falls below the set pressure, the first wing 224 and the second wing 244 come into contact due to the magnetic force of the first wing 224 and the second wing 244, thereby preventing the discharge of gas.

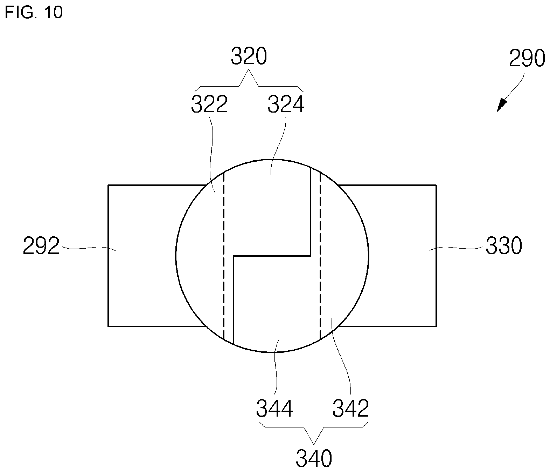

FIG. 9 is a perspective view showing a safety valve 290 according to other embodiments of the present disclosure. FIG. 10 is a plan view showing the safety valve 290 according to some embodiments. As shown in FIGS. 9 and 10, the safety valve 290, according to other embodiments of the present disclosure, includes a first support part 292, a first cover 320, a second support part 330, and a second cover 340. The first cover 320 may include a first body 322 and a first wing 324, and the second cover 340 may include a second body 342 and a second wing 344. The first cover 320 and the second cover 340, according to other embodiments of the present disclosure, are maintained in a state of being in contact with each other by a magnetic force, and the first cover 320 and the second cover 340 may be spaced apart from each other by an external force to open an injection hole 151a.

The first support part 292 and the second support part 330 may be installed in a state of being fixed on the inner or outer side of a cap plate 151. The first cover 320 extending from the first support part 292 may be formed as a single member, and in some embodiments if necessary, may be formed of a first body 322 and a first wing 324. Both of the first body 322 and the first wing 324 may be provided with magnetism, and in an embodiment, only the first wing 324 in contact with the second cover 340 is provided with magnetism.

The second cover 340 extending from the second support part 330 may be formed of a single member, and may be formed of a second body 342 and a second wing 344. Both of the second body 342 and the second wing 344 may be provided with magnetism, or in an embodiment only the second wing 344 in contact with the first cover 320 is provided with magnetism.

The functions of the first cover 320 and the second cover 340 and the functions of the first support part 292 and the second support part 330 are the same as or similar to those in the previous embodiments of the present disclosure, and thus a detailed description will be omitted.

The first wing 324 may be a magnetic body in the shape of a plate of an "L" shape, and the second wing 344 may be a magnetic body in the shape of a plate of an "L" shape. Since the protrusion of the first wing 324 and the protrusion of the second wing 344 are misaligned with each other, the area where the first wing 324 and the second wing 344 come into contact due to a magnetic force may increase, and thus the first wing 324 and the second wing 344 may be formed using a relatively small magnetic body. In addition, since the coupling strength of the first wing 324 and the second wing 344 is increased, leakage of the electrolyte through the safety valve 290 can be prevented, and the operational reliability of the secondary battery 100 can also be improved.

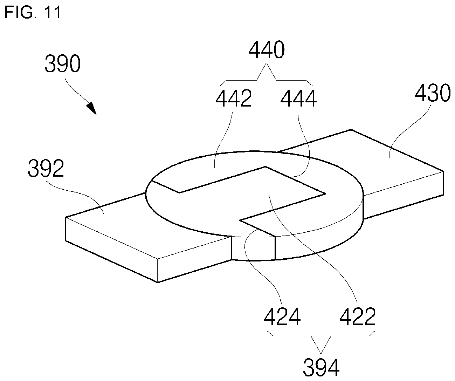

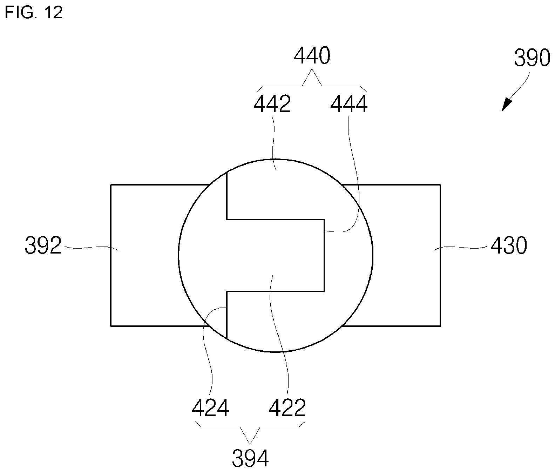

FIG. 11 is a perspective view showing a safety valve 390 according to other embodiments of the present disclosure. FIG. 12 is a plan view showing the safety valve 390 according to some embodiments. As shown in FIGS. 11 and 12, the safety valve 390, according to other embodiments of the present disclosure, includes a first support part 392, a second support part 430, a first cover 394, and a second cover 440. The first cover 394 may include a first protrusion 422 and a first groove 424, and the second cover 440 may include a second groove 444 coupled to the first protrusion 422 and a second protrusion 442 coupled to the first groove 424. Since the first support part 392 and the second support part 430, according to the other embodiments of the present disclosure, are the same as or similar to those in the previous embodiments of the present disclosure, a detailed description thereof will be omitted.

The first cover 394 is plate-shaped, and one side of the first cover 394 is connected to the first support part 392. The first protrusion 422 protruding from the first cover 394 toward the second cover 440 may be inserted into the second groove 444, which is a groove provided in the second cover 440. The second protrusion 442, as shown, is provided on both sides in the width direction of the second groove 444. The second protrusion 442 protrudes toward the first cover 394 and is inserted into the first groove 424 located on both sides in the width direction of the first protrusion 422.

Both of the first cover 394 and the second cover 440 may be formed with a magnetic body having elasticity, and since the area where the first cover 394 and the second cover 440 come into contact with each other increases, the first cover 394 and the second cover 440 may be formed with a relatively small magnetic body.

It has been described that one first protrusion 422 of the safety valve 390 and two second protrusions 442 are provided, but the present disclosure is not limited thereto. The first protrusion 422 may be formed in greater numbers than the second protrusions 442, and the first protrusion 422 may be transformed into a triangle or an oval with a curved surface rather than a rectangle.

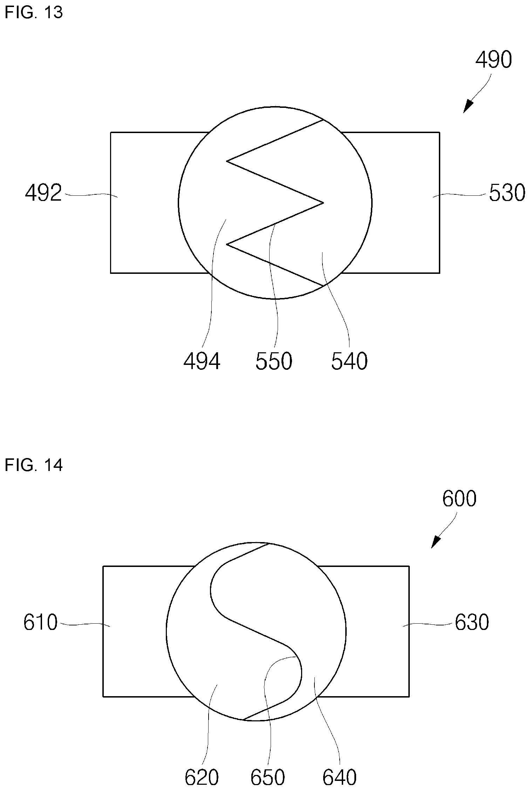

FIG. 13 is a plan view showing a safety valve 490 according to other embodiments of the present disclosure. As shown in FIG. 13, the region where a first cover 494 and a second cover 540 are coupled to each other may be formed in a "W" shape when viewed from a plane. The safety valve 490 according to other embodiments of the present disclosure includes a first support part 492, a second support part 530, a first cover 494, and a second cover 540. The first support part 492 and the second support part 530, according to the other embodiments of the present disclosure, are the same as or similar to those in the previous embodiments of the present disclosure, and thus a detailed description thereof will be omitted. The first cover 494 and the second cover 540 may be divided into a plurality of sections, and may be separated into a section having magnetism and a section not having magnetism. Alternatively, various modifications are possible, such as when both the first cover 494 and the second cover 540 are provided with magnetism.

The first cover 494 and the second cover 540 may be formed using a magnetic body having elasticity, and a boundary line 550 where the first cover 494 and the second cover 540 meet may have a "W" shape when viewed from a plane. Since, as shown, the region where the first cover 494 and the second cover 540 are coupled to each other has a "W" shape when viewed from a plane, the region where the first cover 494 and the second cover 540 come into contact with each other may increase, and thus the first cover 494 and the second cover 540 may be formed with a relatively small magnetic body, in some embodiments.

FIG. 14 is a plan view showing a safety valve 600 according to other embodiments of the present disclosure. As shown in FIG. 14, the safety valve 600, according to other embodiments of the present disclosure, may include a first support part 610, a second support part 630, a first cover 620, and a second cover 640. Since the first support part 610 and the second support part 630 have similar or identical configurations to those of the previous embodiments of the present disclosure, a detailed description thereof will be omitted.

In addition, the first cover 620 and the second cover 640 may be formed with elastic magnetic bodies, and a boundary line 650 where the first cover 620 and the second cover 640 meet may have an "S" shape when viewed from a plane (plan view). Since the region where the first cover 620 and the second cover 640 are coupled to each other has an "S" shape when viewed from a plane, the region where the first cover 620 and the second cover 640 come into contact with each other may increase, and thus the first cover 620 and the second cover 640 may be formed with a relatively small magnetic body.

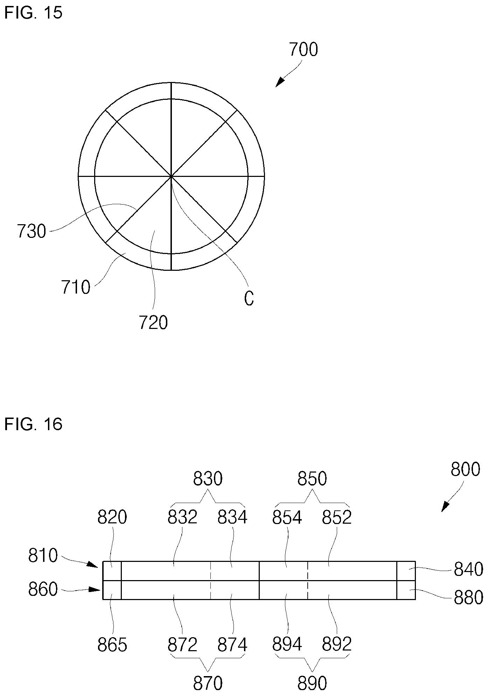

FIG. 15 is a plan view showing a safety valve 700 according to other embodiments of the present disclosure. As shown in FIG. 15, the safety valve 700, according to some embodiments of the present disclosure, may include a fixed support part 710 and a valve cover 720. The safety valve part may have a disc shape and may be cut radially based on the center point (C) of the safety valve 700.
The boundary line 730 between adjacent valve covers 720 is radial when viewed in plan view.

The fixed support part 710, as shown, extends in the shape of a ring and may be separated into multiple parts. The fixed support part 710 may be installed on the inside or outside of the cap plate 151 and may be maintained in a fixed state. The fixed support part 710 may be modified in various manners, such as being inserted and fixed into the inside of the cap plate 151 facing an injection hole 151a or being fixed between the cap plate 151 and the insulation member 156. The fixed support part 710 may form the outer rim of the safety valve 700. The fixed support part 710 and the valve cover 720 may be separated into the same number of parts.

The fixed support part 710 and the valve cover 720 may be provided with magnetism, or the fixed support part 710 is not provided with magnetism and only the valve cover 720 is provided with magnetism.

As the safety valve 700 is cut radially, the safety valve 700 is separated into several pieces. This structure allows the opening and closing of the safety valve 700 to be smoother, in some embodiments, and can provide additional safety functions by imparting different magnetisms to the respective pieces. Specifically, adjacent pieces of the valve cover 720 have different magnetisms (polarities). For example, if one piece has a north pole, the adjacent piece may be designed to have a south pole. This magnetic arrangement allows the valve pieces to mesh with each other and be stably fixed, and when pressure increases, the magnetic repulsive force allows the valve pieces to easily separate and open. This can allow the valve to open and close quickly and efficiently.

In addition, the pieces of the valve cover 720 provided with magnetism may be designed to open only at a certain pressure or higher, and to automatically close again by the magnetic attraction when the pressure decreases. Through this magnetic control, the opening and closing pressure of the safety valve 700 can be precisely controlled, and when the internal pressure of the secondary battery 100 exceeds a certain level, overheating or explosion can be prevented by a quick response.

In addition, the operation of supplying electrolyte into the interior of the secondary battery 100 through the safety valve 700 may also be easily accomplished. FIG. 16 is a cross-sectional view showing a safety valve 800 according to other embodiments of the present disclosure. As shown in FIG. 16, the safety valve 800 may be formed of multiple layers. In addition, the shapes of openings of vent portions forming the respective layers may be different from each other, and if necessary, may be the same.

According to other embodiments of the present disclosure, the safety valve 800 may be in a state in which two layers are stacked. The safety valve 800 may include a first valve 810 that is installed on a cap plate 151 and closes or opens an injection hole 151a by a magnetic force, and a second valve 860 that is located below the first valve 810 and is installed on the cap plate 151 together with the first valve 810 and closes or opens the injection hole 151a by a magnetic force.

The first valve 810 may include a first support part 820 fixed to the cap plate 151 facing the injection hole 151a, a first cover 830 extending from the first support part 820 toward the center of the injection hole 151a, a second support part 840 installed at a position facing the first support part 820 and fixed to the cap plate 151, and a second cover 850 extending from the second support part 840 toward the center of the injection hole 151a. The first cover 830 may include a first body 832 and a first wing 834, and the second cover 850 may include a second body 852 and a second wing 854.

The second valve 860 may be located below the first valve 810. The second valve 860 may include a first support part 865 fixed to the cap plate 151 facing the injection hole 151a, a first cover 870 extending from one side of the first support part 865 toward the center of the injection hole 151a, a second support part 880 installed at a position facing the first support part 865 and fixed to the cap plate 151, and a second cover 890 extending from the second support part 880 toward the center of the injection hole 151a. The first cover 870 may include a first body 872 and a first wing 874, and the second cover 890 may include a second body 892 and a second wing 894.

The shapes of the first valve 810 and the second valve 860 are identical or similar, and are identical or similar to the shape of the safety valve 190 presented in the previous embodiments of the present disclosure, and thus a detailed description thereof will be omitted. Each of the first cover 830, 870 and the second cover 850, 890 may include a magnetic body. The first valve 810 and the second valve 860 may move together and discharge a set amount or greater amount of gas. Alternatively, they may function as a passage for supplying electrolyte to the inside of the secondary battery 100.

The multiple layers of the safety valve 800 can contribute to controlling the internal pressure of the secondary battery 100 by independently operating each layer. Each of the first valve 810 and the second valve 860 may include a magnetic body and can efficiently close or open the injection hole 151a by a magnetic force. This multilayer structure can improve the safety of the secondary battery 100 and enable a quick and accurate response in an emergency situation.

Since the first valve 810 and the second valve 860 have the same shape, the manufacturing process can be simplified, and replacement of parts and maintenance can be performed with ease. If the shapes of the first valve 810 and the second valve 860 in each layer are different, the opening pressure ranges of the first valve 810 and the second valve 860 can be set differently, thereby relieving the internal pressure stepwise. On the contrary, if the opening shapes of the first valve 810 and the second valve 860 are the same, the first valve 810 and the second valve 860 open simultaneously in a consistent pressure range, thereby enabling uniform pressure relief.

In addition, the first valve 810 and second valve 860 may also function as electrolyte supply passages. During charging and discharging of the secondary battery 100, while ensuring that the internal pressure does not exceed a certain level, a function of smoothly supplying electrolyte is provided when necessary, which plays an important role in maintaining the performance and extending the life of the secondary battery 100.

In this way, the safety valve 800 of the present disclosure provides an opening/closing structure of the injection hole 151a by using multiple layers and magnetism, thereby increasing the safety of the secondary battery 100.

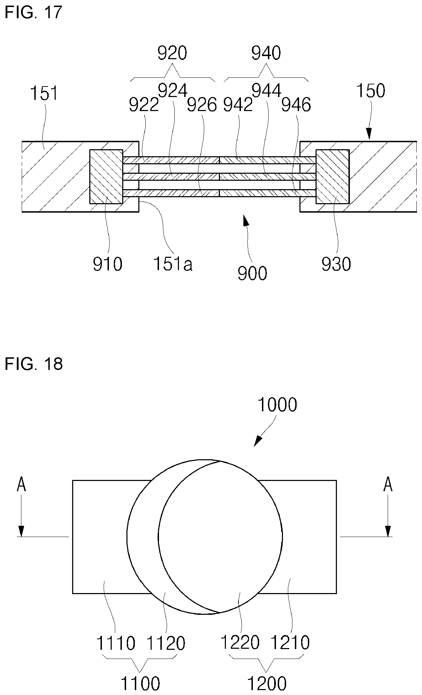

FIG. 17 is a cross-sectional view showing a state in which a safety valve 900, according to other embodiments of the present disclosure, is installed in multiple layers. As shown in FIG. 17, the safety valve 900 is installed on a cap plate 151, and consists of multiple layers to close or open an injection hole 151a, and may be modified to have various shapes within the technical concept of having a magnetic force. The multilayer structure of the safety valve 900 can allow each layer to operate independently, enabling more precise pressure control, and can maximize the safety of the secondary battery 100.

In some examples, the safety valve 900 may include a first pillar part 910, a first valve 920, a second pillar part 930, and a second valve 940.

The first pillar part 910 may be modified to have various shapes within the technical concept of being fixed to the inner side of the cap plate 151 facing one side of the injection hole 151a.

The first valve 920 may extend from the first pillar part 910 toward the center of the injection hole 151a and may be modified to have various shapes within the technical concept of forming a plurality of layers. The first valve 920 may be installed in a state in which a plurality of plate-shaped valves are spaced apart from each other in the vertical direction. This allows each layer to operate in a different pressure range, thereby relieving the pressure stepwise. In some examples, the first valve 920 may include a 1-1 valve 922 extending from the first pillar part 910, a 1-2 valve 924 extending from the first pillar part 910 and positioned below the 1-1 valve 922, and a 1-3 valve 926 extending from the first pillar part 910 and positioned below the 1-2 valve 924.

The second pillar part 930 may be modified to have various shapes within the technical concept of being fixed to the inner side of the cap plate 151 facing the other side (another side) of the injection hole 151a. The first pillar part 910 and the second pillar part 930 may be double-injected molded together with the cap plate 151. The first pillar part 910 and the second pillar part 930 may be installed at opposite positions with the injection hole 151a disposed therebetween. The first pillar part 910 and the second pillar part 930 may extend in the vertical direction. The first valve 920 forming a plurality of layers may be connected to the first pillar part 910, and the second valve 940 forming a plurality of layers may be connected to the second pillar part 930. The first pillar part 910 and the second pillar part 930 may not have magnetism, and at least one of the first valve 920 and the second valve 940 may have magnetism.

The second valve 940 may extend from the second pillar part 930 toward the center of the injection hole 151a and may be modified to have various shapes within the technical concept of forming multiple layers. The second valve 940 may be formed in a number corresponding to the number of the first valve 920, and a plurality of plate-shaped valves may be installed in a state of being spaced apart from each other in the vertical direction. The thus arranged second valve 940 may operate in cooperation with the first valve 920, thereby maintaining a pressure balance inside the secondary battery 100 and quickly relieving the pressure in an emergency situation. In some examples, the second valve 940 may include a 2-1 valve 942 extending from the second pillar part 930 and contacting the 1-1 valve 922, a 2-2 valve 944 extending from the second pillar part 930 and contacting the 1-2 valve 924, and a 2-3 valve 946 extending from the second pillar part 930 and contacting the 1-3 valve 926.

In order to maintain a state in which the first valve 920 and the second valve 940 are in contact with each other by a magnetic force, at least one of the first valve 920 and the second valve 940 may be provided with a magnetic force. This structure using a magnetic body enables a valve to be opened and closed quickly, thereby ensuring a quick response in an excessive pressure situation. In some examples, the first valve 920 and the second valve 940 are formed of multiple layers, and the shapes in which the first valve 920 and the second valve 940 are coupled to each other may be different for the respective layers. Due to this, each layer can be opened and closed within a specific pressure range, which can further enhance the safety of the secondary battery 100.

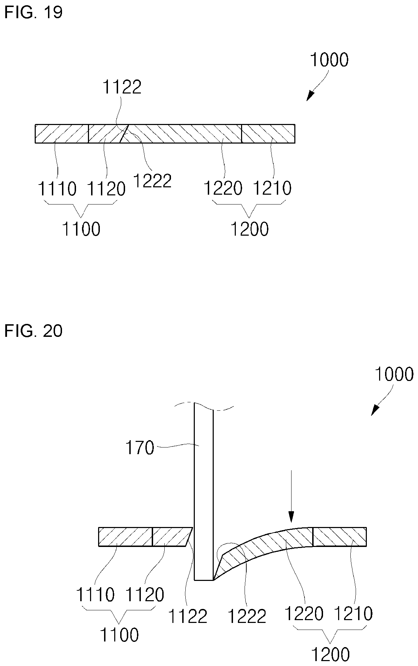

FIG. 18 is a plan view showing a safety valve 1000 according to other embodiments of the present disclosure. FIG. 19 is a cross-sectional view taken along line A-A of FIG. 18. FIG. 20 is a front sectional view showing a state in which a movable valve 1200, according to other embodiments of the present disclosure, is bent downward by a supply pipe 170. As shown in FIGS. 18 to 20, the safety valve 1000 may include a fixed valve 1100 (including support part 1110 and cover 1120) and a movable valve 1200 (including support part 1210 and cover 1220).

The fixed valve 1100 may be modified to have various shapes within the technical concept of being fixed to one side of a cap plate 151 facing an injection hole 151a. While restricting the movement of the fixed valve 1100, only the movement of the movable valve 1200 occurs. The fixed valve 1100 may have a first inclined surface 1122 at an end facing the movable valve 1200.

The movable valve 1200 may be installed on the other side of the cap plate 151 facing the injection hole 151a, and may be modified to have various shapes within the technical concept of being configured to open the injection hole 151a while being spaced apart from the fixed valve 1100 when supplying electrolyte. The movable valve 1200 may have a second inclined surface 1222 that comes into contact with the first inclined surface 1122 at the end facing the fixed valve 1100. The design of this inclined surface can allow the movable valve 1200 to more firmly close the injection hole 151a by engaging with the fixed valve 1100. In some examples, the movable valve 1200 may have elasticity.

The fixed valve 1100 and the movable valve 1200 may be formed in the shape of a plate. In addition, at least one of the fixed valve 1100 and the movable valve 1200 may have a magnetic force (may provide a magnetic force). By having a magnetic force, the two valves can precisely mesh with each other and quickly respond to a pressure change.

The fixed valve 1100 and the movable valve 1200 may be bonded to each other by a magnetic force to block the injection hole 151a, and may be moved by an external force to open the injection hole 151a. Since the fixed valve 1100 and the movable valve 1200 are stably fixed by the magnetic force unless an external force is applied, electrolyte leakage can be prevented. When the supply pipe 170 presses the movable valve 1200 downward, the movable valve 1200 is pushed by the supply pipe 170 and bends downward, thereby forming a space in which the electrolyte is supplied. This structure of the movable valve 1200 enables the electrolyte to be supplied smoothly, and the injection hole 151a may be opened quickly when necessary.
The movable valve 1200 is elastic, allowing it to deform under the internal pressure of the secondary battery 100. For example, the movable valve 1200 may bend upward due to the pressure inside the secondary battery 100, creating a gap with the fixed valve 1100. Gas can be discharged through the space formed between the fixed valve 1100 and the movable valve 1200.

In addition, the movable valve 1200 may be made of an elastic material having a restoring force, and thus, when the external force is removed, the movable valve 1200 returns to its original position and closes the injection hole 151a again. This prevents unnecessary leakage of the electrolyte and contributes to improving the safety of the secondary battery 100.

The electrode assembly 110 of the present disclosure will be described in more detail.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}CO_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); Li₄FePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

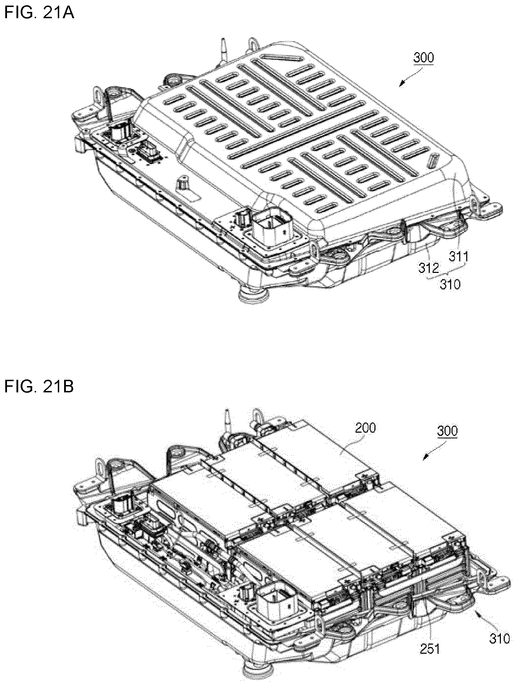

The batteries according to the above-described embodiments may be used to manufacture a battery pack. FIGS. 21A and 21B are perspective views showing a battery pack including the example secondary battery 100 according to the present disclosure. Referring to FIGS. 21A and 21B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

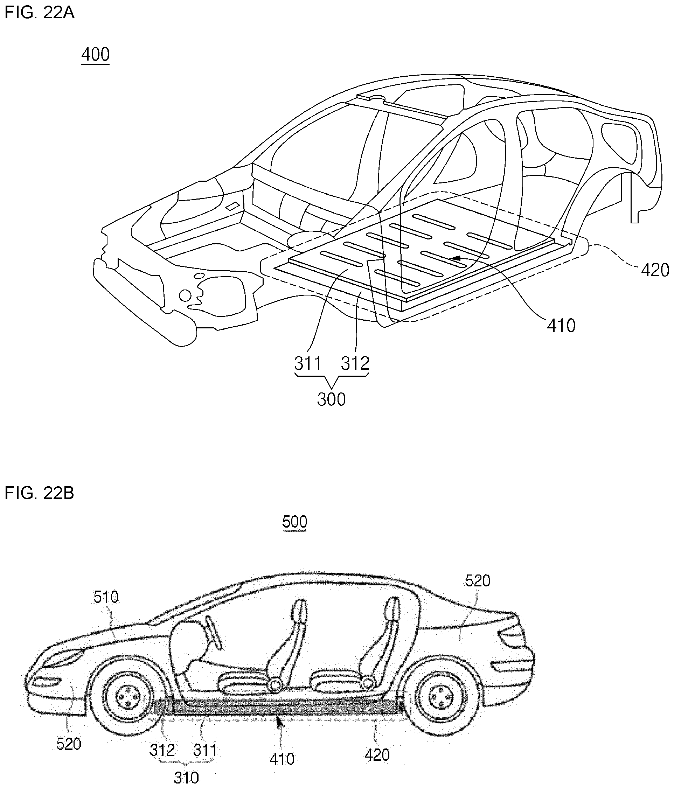

FIGS. 22A and 22B are, respectively, a perspective view and a side view showing a vehicle body 400 and 500 including the example battery pack 300 according to the present disclosure.

In FIG. 22A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 22B, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body 400.

Although a few embodiments of the present disclosure have been shown and described, it would be appreciated by those skilled in the art that various changes and modifications may be made in this embodiment without departing from the principles of the disclosure, the scope of which is defined in the appended claims and their equivalents.

Embodiments are set out in the following clauses:
Clause 1. A secondary battery comprising:
   an electrode assembly including a first electrode plate, a second electrode plate, and a separator;
   a case accommodating the electrode assembly;
   a cap plate sealing an upper opening of the case and having an injection hole that is configured as a supply passage for electrolyte; and
   a safety valve installed on the cap plate, the safety valve configured to seal the injection hole by a magnetic force and configured to move by external force to open the injection hole.
Clause 2. The secondary battery of clause 1, wherein the safety valve comprises:
   a first support part fixed to one side of the cap plate facing the injection hole;
   a first cover extending from the first support part toward a center of the injection hole;
   a second support part fixed to another side of the cap plate facing the injection hole; and
   a second cover extending from the second support part toward the center of the injection hole.
Clause 3. The secondary battery of clause 2, wherein at least one of the first cover and the second cover is configured to provide the magnetic force.
Clause 4. The secondary battery of clause 2 or 3, wherein the first cover and the second cover are configured to provide magnetic forces of different polarities.
Clause 5. The secondary battery of clause 2 or 3, wherein the first cover is configured to provide the magnetic force, and the second cover comprises at least one of iron, an iron alloy, nickel, and a cobalt alloy.
Clause 6. The secondary battery of any one of clauses 2 to 5, wherein the first cover comprises a first protrusion and a first groove, and the second cover comprises a second groove coupled to the first protrusion and a second protrusion coupled to the first groove.
Clause 7. The secondary battery of any one of clauses 2 to 6, wherein the first cover and the second cover comprise plastic magnets.
Clause 8. The secondary battery of clause 7, wherein the plastic magnet comprises an organic ferromagnetic material p-TCNQ.
Clause 9. The secondary battery of any one of clauses 2 to 8, wherein a region where the first cover and the second cover are coupled to each other is any one of an "I" shape, an "S" shape, and a "W' shape when viewed in a plan view.
Clause 10. The secondary battery of any one preceding clause, wherein the safety valve comprises:
   a fixed valve fixed to one side of the cap plate facing the injection hole; and
   a movable valve installed on another side of the cap plate facing the injection hole and configured to open the injection hole away from the fixed valve when supplying the electrolyte.
Clause 11. The secondary battery of clause 10, wherein the fixed valve and the movable valve are formed in the shape of a plate.
Clause 12. The secondary battery of clause 10 or 11, wherein at least one of the fixed valve and the movable valve is configured to provide the magnetic force.
Clause 13. The secondary battery of clause 10, 11 or 12 wherein the fixed valve has a first inclined surface at a first end facing the movable valve, and the movable valve has a second inclined surface contacting the first inclined surface at a second end facing the fixed valve.
Clause 14. The secondary battery of any one of clauses 10 to 13, wherein the movable valve has elasticity.
Clause 15. A secondary battery comprising:
   an electrode assembly including a first electrode plate, a second electrode plate, and a separator;
   a case accommodating the electrode assembly;
   a cap plate sealing the upper opening of the case and having an injection hole that is configured as a supply passage for electrolyte; and
   a safety valve installed on the cap plate, including multiple layers configured to close or open the injection hole and configured to provide a magnetic force.
Clause 16. The secondary battery of clause 15, wherein the safety valve comprises:
   a first pillar part fixed to an inner side of the cap plate facing one side of the injection hole;
   a first valve extending from the first pillar part toward a center of the injection hole and forming a plurality of layers;
   a second pillar part fixed to the inner side of the cap plate facing another side of the injection hole; and
   a second valve extending from the second pillar part toward the center of the injection hole and forming a plurality of layers.
Clause 17. The secondary battery of claim 16, wherein the first valve is installed in a state in which a plurality of plate-shaped valves are spaced apart in a vertical direction, and the second valve is formed in a number corresponding to a number of the plurality of plate-shaped valves of the first valve and is installed in a state in which a plurality of plate-shaped valves of the second valve are spaced apart in the vertical direction.
Clause 18. The secondary battery of claim 16 or 17, wherein at least one of the first cover and the second cover is configured to provide the magnetic force.
Clause 19. The secondary battery of claim 16, 17 or 18 wherein the first valve comprises:
   a 1-1 valve extending from the first pillar part;
   a 1-2 valve extending from the first pillar part and positioned below the 1-1 valve; and
   a 1-3 valve extending from the first pillar part and positioned below the 1-2 valve, and
   the second valve comprises:
   a 2-1 valve extending from the second pillar part and in contact with the 1-1 valve;
   a 2-2 valve extending from the second pillar part and in contact with the 1-2 valve; and
   a 2-3 valve extending from the second pillar part and in contact with the 1-3 valve.
Clause 20. The secondary battery of any one of clauses 16 to 19, wherein the first valve and the second valve are formed in multiple layers, and the shapes in which the first valve and the second valve are combined are different for each layer.

## Claims

1. A secondary battery comprising:
an electrode assembly (110) including a first electrode plate (111), a second electrode plate (112), and a separator (113);
a case (140) accommodating the electrode assembly;
a cap plate (151) sealing an upper opening of the case and having an injection hole (151a) that is configured as a supply passage for electrolyte; and
a safety valve (190) installed on the cap plate, the safety valve configured to seal the injection hole (151a) by a magnetic force and configured to move by external force to open the injection hole.

2. The secondary battery as claimed in claim 1, wherein the safety valve comprises:
a first support part fixed to one side of the cap plate facing the injection hole;
a first cover extending from the first support part toward a center of the injection hole;
a second support part fixed to another side of the cap plate facing the injection hole; and
a second cover extending from the second support part toward the center of the injection hole.

3. The secondary battery as claimed in claim 2, wherein at least one of the first cover and the second cover is configured to provide the magnetic force.

4. The secondary battery as claimed in claim 2 or 3, wherein the first cover and the second cover are configured to provide magnetic forces of different polarities.

5. The secondary battery as claimed in claim 2 or 3, wherein the first cover is configured to provide the magnetic force, and the second cover comprises at least one of iron, an iron alloy, nickel, and a cobalt alloy.

6. The secondary battery as claimed in any one of claims 2 to 5, wherein the first cover comprises a first protrusion and a first groove, and the second cover comprises a second groove coupled to the first protrusion and a second protrusion coupled to the first groove.

7. The secondary battery as claimed in any one of claims 2 to 6, wherein the first cover and/ or the second cover comprise plastic magnets, optionally, wherein the plastic magnet comprises an organic ferromagnetic material p-TCNQ.

8. The secondary battery as claimed in any one of claims 2 to 8, wherein a region where the first cover and the second cover are coupled to each other is any one of an "I" shape, an "S" shape, and a "W' shape when viewed in a plan view.

9. The secondary battery as claimed in any one of claims 1 to 9, wherein the safety valve comprises:
a fixed valve fixed to one side of the cap plate facing the injection hole; and
a movable valve installed on another side of the cap plate facing the injection hole and configured to open the injection hole away from the fixed valve when supplying the electrolyte, optionally, wherein the fixed valve and the movable valve are formed in the shape of a plate, and/ or, wherein the fixed valve has a first inclined surface at a first end facing the movable valve, and the movable valve has a second inclined surface contacting the first inclined surface at a second end facing the fixed valve, and/ or wherein the movable valve has elasticity.

10. The secondary battery as claimed in any one of claims 1 to 8, wherein the safety valve as elasticity.

11. The secondary battery as claimed in any one of claims 1 to 10, wherein the safety valve includes multiple layers configured to close or open the injection hole and configured to provide a magnetic force.

12. The secondary battery as claimed in claim 11, wherein the safety valve comprises:
a first pillar part fixed to an inner side of the cap plate facing one side of the injection hole;
a first valve extending from the first pillar part toward a center of the injection hole and forming a plurality of layers;
a second pillar part fixed to the inner side of the cap plate facing another side of the injection hole; and
a second valve extending from the second pillar part toward the center of the injection hole and forming a plurality of layers.

13. The secondary battery as claimed in claim 12, wherein the first valve is installed in a state in which a plurality of plate-shaped valves are spaced apart in a vertical direction, and the second valve is formed in a number corresponding to a number of the plurality of plate-shaped valves of the first valve and is installed in a state in which a plurality of plate-shaped valves of the second valve are spaced apart in the vertical direction.

14. The secondary battery as claimed in claim 12 or 13, wherein the first valve comprises:
a 1-1 valve extending from the first pillar part;
a 1-2 valve extending from the first pillar part and positioned below the 1-1 valve; and
a 1-3 valve extending from the first pillar part and positioned below the 1-2 valve,
and
the second valve comprises:
a 2-1 valve extending from the second pillar part and in contact with the 1-1 valve;
a 2-2 valve extending from the second pillar part and in contact with the 1-2 valve; and
a 2-3 valve extending from the second pillar part and in contact with the 1-3 valve.

15. The secondary battery as claimed in claim 12, 13, or 14, wherein the first valve and the second valve are formed in multiple layers, and the shapes in which the first valve and the second valve are combined are different from each layer.
